(19) **Europäisches Patentamt European Patent Office Office européen des brevets**

(11) **EP 4 711 818 A1**

(12) **EUROPEAN PATENT APPLICATION**

(43) Date of publication:
**18.03.2026 Bulletin 2026/12**

(51) International Patent Classification (IPC):
***G01S 19/21*** *(2010.01)*

(21) Application number: **25200186.2**

(52) Cooperative Patent Classification (CPC):
**G01S 19/215**

(22) Date of filing: **04.09.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.09.2024 US 202463691753 P**
**09.09.2024 US 202463692368 P**
**28.05.2025 US 202519221170**

(71) Applicant: **Novatel, Inc.**
**Calgary, Alberta T3K 2L5 (CA)**

(72) Inventors:
- **PIRSIAVASH, Ali**
**Calgary, T3K 2L5 (CA)**
- **BROUMANDAN, Ali**
**Calgary, T3K 2L5 (CA)**

(74) Representative: **Kaminski Harmann**
**Patentanwälte AG**
**Landstrasse 124**
**9490 Vaduz (LI)**

(54) **SYSTEMS, METHODS, AND MEDIA FOR ENHANCED MESSAGE-TO-CODE DATA TIE (EMCDT) FOR ELECTRONIC MESSAGE AUTHENTICATION**

(57) Techniques are provided for Enhanced Message-to-Code Data Tie (EMCDT) for electronic message authentication. A processor may receive a navigation message with navigation data that requires authentication and adheres to a delayed key disclosure protocol. There may be a service interruption to the authentication service. The processor can still authenticate the navigation data based on performance of an EMCDT algorithm that uses a Message Authentication Code and Key (MACK) MACK that corresponds to previously authenticated navigation message. Specifically, the MACK for the previously authenticated message can be used when the transmitter identifier of the navigation data to be authenticated matches a $PRN_D$ value associated with the previously authenticated message and when a version identifier of the navigation data to be authenticated matches the version identifier of the previously authenticated message.

FIG. 2

**Description**

The invention relates generally to electronic data security, and in particular, to techniques for Enhanced Message-to-Code Data Tie (EMCDT) for electronic message authentication.

Global Navigation Satellite System (GNSS) systems employ various security measures, such as GNSS cryptographic protection techniques, to ensure the integrity and reliability of their solutions. One such technique is Open Service Navigation Message Authentication (OSNMA), a feature introduced by the European Union's Galileo system to protect against spoofing and data corruption. OSNMA allows users to verify the authenticity of GNSS data by embedding cryptographic signatures in the navigation messages, ensuring that the data comes from Galileo satellites and hasn't been altered by malicious actors. Unlike military-encrypted signals, OSNMA is available to civilian users, providing enhanced security without requiring special access or proprietary equipment.

OSNMA uses a delayed verification mechanism, where cryptographically signed data is transmitted, but its verification only occurs after the receiver obtains authenticating information (i.e., authentication codes and keys), which are broadcast later in subsequent messages. The receiver first gathers navigation data along with the embedded signatures but can only authenticate these messages after receiving the delayed authentication codes and keys. This staggered transmission helps maintain efficient bandwidth while still ensuring robust security. Once the keys arrive, the receiver can verify that the previously received data has not been altered and is an authentic message that originates from legitimate transmitting satellites. Although the conventional OSNMA is effective against spoofing and corruption of navigation signals, the delayed transmission technique does have its limitations.

Specifically, Galileo uses different signal formats for its Open Service (OS) signals. A subset of Galileo satellites transmits OSNMA data within the OS signals, specifically in the E1B I/NAV message. The OSNMA service utilizes reserved bits within this message format. These reserved bits, which were previously unused, are now allocated for the cryptographic signatures and related authentication data (e.g., timestamps, message identifiers, etc.).

An OSNMA message is transmitted in small parts called pages, with 15 pages transmitted over 30 seconds providing all the necessary information (such as the Header and Root Key (HKROOT) and Message Authentication Code and Key (MACK). Once all 15 pages are received, the receiver can use the complete set of data to authenticate the message. However, if OSNMA data reception is interrupted over one or more defined periods (e.g., 30 second period), authentication cannot be performed. Therefore, OSNMA data reception interruption, which may occur more frequently in obstructed and challenging environments (e.g., urban and suburban environments), can significantly degrade the availability and continuity of the standard OSNMA service.

Collision attacks can occur when a bad actor identifies two different inputs that produce the same output, potentially enabling message manipulation that could be falsely authenticated if the system relies on the same code and key. Even with the delayed nature of the standard OSNMA service, collision attacks can still be a security concern that needs to be considered for OSNMA services, especially when used in connection with critical for safety-of-life applications and/or everyday-life applications.

Techniques are provided for Enhanced Message-to-Code Data Tie (EMCDT) for electronic message authentication. Specifically, and as will be described in further detail below, the one or more embodiments as described herein can authenticate electronic messages during a service interruption using the Message Authentication Codes and Keys (MACKs) that correspond to previously authenticated messages when certain conditions are met.

A processor (e.g., EMCDT module executed by the processor) may generate and store an EMCDT block for each authenticated message received during one of a plurality of different data units (e.g., subframes) that are within a fixed or dynamic size window of moving (i.e., sliding) buffer (hereinafter "moving window buffer"). Alternatively, an EMCDT block corresponding to each authenticated message may be sequentially stored in a fixed or dynamic size queue buffer (e.g., First In, First Out (FIFO) buffer), without considering the data unit over which the authenticated message is received.

The EMCDT block for an authenticated message, transmitted by an identified transmitter, may include a navigation message identifier (NMID) with a version stamp of version data from the authenticated message and non-version data from the authenticated message. The EMCDT block for the authenticated message may further include a Pseudorandom Noise data $(PRN_D)$ value identifying the transmitter that transmitted the authenticated message, all or subset of the corresponding and verified tag(s) (e.g., MAC tag(s)), and all related information required for the authentication process. The verified tag(s) and related information may, for example, be transmitted by a different or same transmitter, which transmitted the authenticated message, and during the same or different subframe.

In an embodiment, the buffer includes (1) the EMCDT blocks for different authenticated messages and (2) the keys (i.e., cryptographic keys) used for authenticating the different authenticated messages corresponding to the EMCDT blocks in the buffer.

The processor may receive a message that includes navigation data that requires authentication and adheres to a delayed key (and code) disclosure protocol. There may be an authentication service interruption such that the code and/or key needed for authentication have not been or will not be received in a later transmission.

Despite the authentication service interruption, the processor can implement an EMCDT algorithm to alternatively authenticate the navigation data using the codes and keys (e.g., MACKs) that correspond to previously authenticated messages when certain conditions are met.

Specifically, the processor may determine if the transmitter identifier of the message with the navigation data to be authenticated (i.e., unauthenticated message) matches a $PRN_D$ value of at least one EMCDT block included in the buffer and that corresponds to a previously authenticated message. If so, the processor may determine if the version stamp of the unauthenticated message matches the version stamp of the NMID of the at least one EMCDT block identified in the buffer. When both conditions are met, the processor may utilize the code and key (e.g., MACK) associated with the at least one EMCDT block that corresponds to the previously authenticated message to authenticate the navigation data of the unauthenticated message.

The description below refers to the accompanying drawings, of which:

Fig. 1 is an illustration of an example system environment for Enhanced Message-to-Code Data Tie (EMCDT) for electronic message authentication according to the one or more embodiments as described herein;

Fig. 2 is a flow diagram of a sequence of steps for generating EMCDT blocks, each including a navigation message identifier (NMID), for authenticated messages received during data units and that are included within a buffer according to the one or more embodiments as described herein;

Fig. 3A is an example moving window buffer including subframes 1 through 10 according to the one or more embodiments as described herein;

Fig. 3B is an example of the moving window buffer including subframes 2 through 11 according to the one or more embodiments as described herein;

Fig. 4 is a flow diagram of a sequence of steps for implementing an EMCDT algorithm towards authenticating navigation data, which adheres to a delayed key disclosure protocol, using one or more EMCDT blocks of a buffer according to the one or more embodiments as described herein;

Fig. 5 is a flow diagram of a sequence of steps for authenticating navigation data, which adheres to a delayed key disclosure protocol, using a cross-verification technique according to the one or more embodiments as described herein; and

Fig. 6 is a flow diagram of a sequence of steps for authenticating navigation data, which adheres to a delayed key disclosure protocol, using an alternative-verification technique according to the one or more embodiments as described herein.

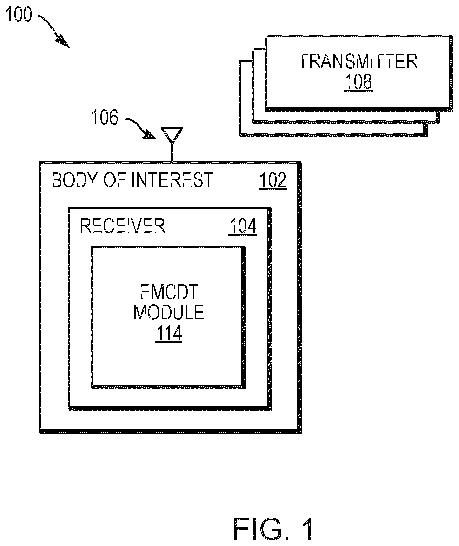

Fig. 1 is an illustration of an example system environment 100 for Enhanced Message-to-Code Data Tie (EMCDT) for electronic message authentication according to the one or more embodiments as described herein. System environment 100 includes a body of interest 102, e.g., a moving vehicle, a stationary object, etc. Coupled to the body of interest 102 may be a receiver 104 and an antenna 106. Antenna 106, coupled to the body of interest 102 and in communication with receiver 104, may receive one or more signals from one or more transmitters 108.

In an embodiment, the one or more transmitters 108 may be one or more Global Navigation Satellite System (GNSS) satellites that transmit one or more navigation signals, e.g., GNSS satellite signals (not shown). When the one or more transmitters are one or more GNSS satellites, the one or more GNSS satellites may be from the Galileo constellation of satellites. In an embodiment, the one or more transmitters 108 implement a navigation data security technique (i.e., a message authentication technique) that employs delayed disclosure of keys (i.e., cryptographic codes and keys) as part of its authentication process.

For example, transmitter 108 may apply a key to navigation data to generate a tag (e.g., Message Authentication Code (MAC) tag). As used herein, code, tag, MAC, and MAC tag may be used interchangeably to refer to the cryptographic value or output that serves the purpose of message authentication. The transmitter 108 may transmit a navigation message with the navigation data and the code (tag) in a data unit. In an embodiment, the data unit is a subframe. Alternatively, the transmitter may transmit the navigation message with the navigation data in the data unit and the same or different transmitter 108 may transmit a different message with the code (tag) in the same or in a later data unit.

In an even later data unit, a transmitter 108 (e.g., a same or different transmitter 108) may transmit a navigation message with the key that is used with the code (tag) to authenticate the navigation data from the earlier data unit. The data units with the navigation data, codes (tags), and keys may be part of a larger frame structure that allows for the continuous transmission of navigation data and authentication information. Further, and as described herein, the message authenticating code (tag) and corresponding key may, together, be referred to as a MACK.

In an embodiment, the navigation message authentication technique employing delayed disclosure of keys is the Open Service Navigation Message Authentication (OSNMA) service that is offered by the Galileo satellite navigation system.

Although reference may be made to transmitters 108 being GNSS satellites transmitting GNSS satellite signals, it is expressly contemplated that the one or more embodiments as described herein may be utilized with any of a variety of different types of transmitters 108. For example, transmitters 108 may be terrestrial transmitters that transmit any of a variety of different navigation signals. As such, the description of transmitters 108 being GNSS satellites that transmit GNSS signals should be taken for illustrative purposes only.

Receiver 104 may, based on the reception of signals at antenna 106, produce raw measurements (e.g., GNSS raw measurements), such as pseudoranges, carrier phases, and Doppler; and position (e.g., GNSS position), velocity (e.g., GNSS velocity) and time (e.g., GNSS time), position covariance, and velocity covariance; and, as appropriate, GNSS observables.

In an embodiment, the body of interest 102 with the coupled receiver 104 may operate in any of a variety of different environments. For example, the variety of different environments may include, but are not limited to, open-sky environments, urban areas, suburban areas, highways, urban canyons, etc. In an embodiment, one or more of the different environments may be classified as obstructed and/or challenging environments. For example, urban areas, suburban areas, highways, and urban canyons may be classified as obstructed and/or challenging environments.

In an embodiment, the obstructed and/or challenging environment may interrupt the service of the message authentication technique that employs delayed disclosure of keys as part of its authentication process. For example, the navigation data to be authenticated may be transmitted from transmitter 108 and received by receiver 104 that may be in an obstructed and/or challenging environment. The environment may cause a service interruption, which in turn prevents the receiver 104 from receiving the later transmitted code, key, and/or other related information that is required to authenticate the navigation data in the earlier message. Therefore, the interruption in the authentication service can prevent the navigation data from being authenticated and then used. This is a problem that is encountered by standard message authentication techniques that employ delayed disclosure of keys as part of its authentication process.

As depicted in Fig. 1, receiver 104 includes Enhanced Message-to-Code Data Tie (EMCDT) module 114. The EMCDT module 114 implements the one or more embodiments as described herein to overcome the problems encountered by standard message authentication techniques that employ delayed disclosure of keys as part of its authentication process (e.g., standard OSNMA) as described above.

In the event of uninterrupted service, the EMCDT module 114 can be used for cross-authentication of navigation data, thereby augmenting the reliability and integrity of the authentication service and addressing security concerns related to the rare but potential occurrence of collision attacks in OSNMA. Specifically, and as will be described in further detail below, there may be an authentication service interruption such that the code and/or key needed for authentication have not been or will not be received in a later transmission (e.g., a later subframe transmission). The EMCDT module 114 can alternatively authenticate the navigation data according to the one or more embodiments as described herein.

Specifically, and as will be described in further detail below, the EMCDT module 114 can implement an EMCDT algorithm to authenticate the navigation data by using the MACKs that correspond to previously authenticated navigation messages, from the same or different transmitters 108, when certain conditions (e.g., two) are met. As a result, the one or more embodiments as described herein can alternatively authenticate navigation data during the interrupted authentication service. That is, the one or more embodiments as described herein do not prevent the interruption of the authentication service, but instead allow receiver 104 to operate seamlessly to alternatively authenticate navigation data during the interrupted authentication service.

As such, the one or more embodiments as described herein provide an improvement over standard message authentication techniques that employ delayed disclosure of keys as part of its authentication process (e.g., standard OSNMA). Specifically, such standard message authentication techniques cannot authenticate navigation data during authentication service interruptions. Because the navigation data cannot be authenticated during authentication service interruptions according to standard message authentication techniques, the navigation data cannot be used by, for example, safety-of-life applications and/or every-day-life applications. In contrast, and as described in further detail below, the EMCDT module 114 can still authenticate, alternatively, navigation data during authentication service interruptions. Because the navigation data can be alternatively authenticated, the navigation data can still be and may be used by safety-of-life applications and/or every-day-life applications during authentication service interruptions according to the one or more embodiments as described herein.

When there is no service interruption, the EMCDT module 114 can be used for cross-authenticating the navigation data to improve authentication service reliability and integrity.

Therefore, the one or more embodiments as described herein provide an improvement in the existing technological field of electronic data security. Specifically, the one or more embodiments as described herein provide in improvement in the existing technological field of electronic message data security and authentication.

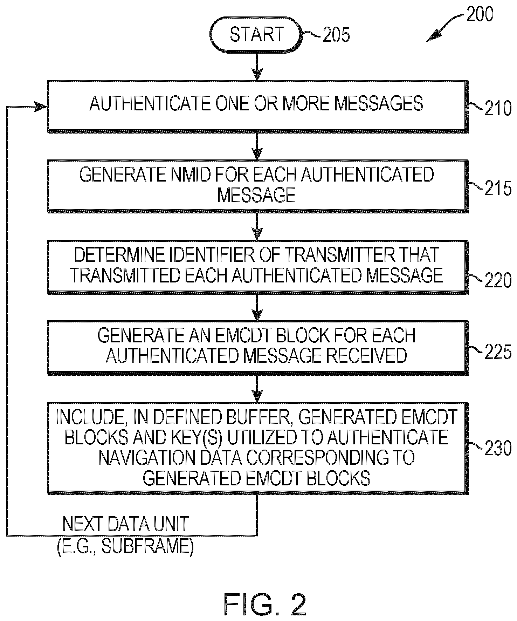

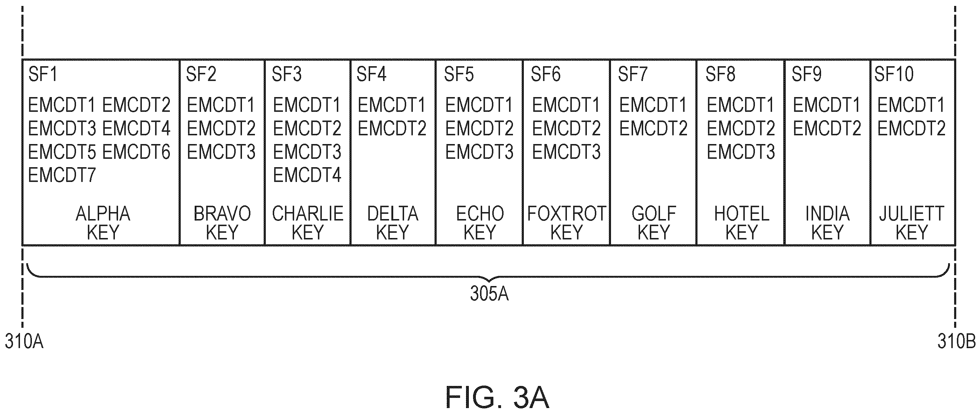

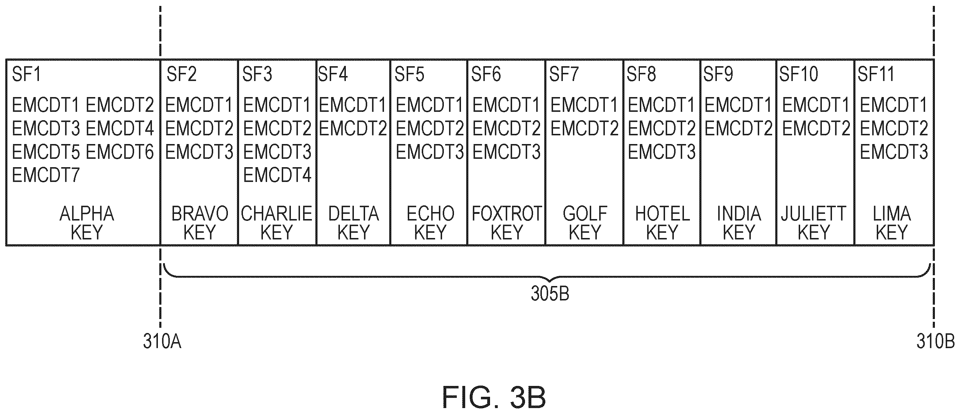

As will be described in further detail below in relation to Figs. 2, 3A, and 3B, when navigation data of a message is authenticated, the EMCDT module 114 may generate a navigation message ID (NMID) using a version stamp of version data of the authenticated message and non-version data of the authenticated message, plus all other information required for the authentication process.

The EMCDT module 114 may generate an EMCDT block for each authenticated message. In an embodiment, each authenticated message may be received during one of a plurality of different subframes (i.e., data units) that are within a fixed or dynamic size moving window buffer. Alternatively, each generated EMCDT block, corresponding to each authenticated message, may be sequentially stored in a queue buffer without considering the time slot of the subframe over which the authenticated message is received. The EMCDT block for an authenticated message may include the NMID generated from the authenticated message, a Pseudorandom Noise data (PRND) value identifying the transmitter 108 that transmitted the authenticated message, all or a subset of the corresponding and verified tag(s) (e.g., MAC tag(s)), and all related information required for the authentication process.

Therefore, the buffer may include different EMCDT blocks for the authenticated messages. The buffer may also include each key that is used for the authentication of the messages corresponding to the EMCDT blocks in the buffer.

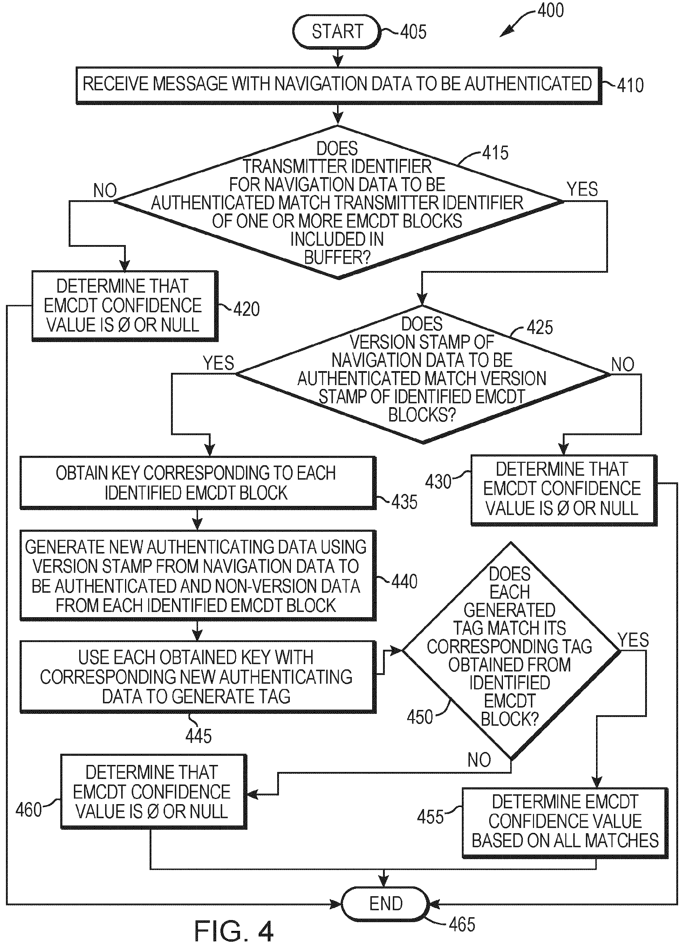

Moreover, and as will be described in further detail below in relation to Fig. 4, the EMCDT module 114 may receive a message with navigation data to be authenticated. The EMCDT module 114 can implement an EMCDT algorithm and tie the navigation data, which is to be authenticated, to one or more EMCDT blocks of the buffer. The EMCDT module 114 can use the MACK from each identified EMCDT block from the buffer to alternatively or cross authenticate the navigation data during, for example, an authentication service interruption or collision attack.

Fig. 2 is a flow diagram of a sequence of steps for generating EMCDT blocks, each including an NMID, for authenticated messages received during data units and that are included within a buffer according to the one or more embodiments as described herein.

For simplicity and ease of understanding, the examples as described in relation to Fig. 2 may refer to generating an EMCDT block for a single authenticated message received during a data unit. However, it should be expressly understood that the one or more embodiments as described herein can generate, in parallel or in series, an EMCDT block for each authenticated message received during one or more data units (i.e., subframes).

In an embodiment, subframes may be part of a larger frame structure that lasts for 6 minutes and contains 12 subframes, and each subframe lasts for 30 seconds and consists of 15 pages. Further, as used herein, an authenticated message may be a message that includes data (e.g., navigation data) that has been authenticated using a code and key, thereby resulting in the authenticated data. Although the examples as described herein may refer to subframes for illustrative purposes, it is expressly contemplated that the one or more embodiments as described herein can be utilized with any type of data units and not just subframes.

Additionally, although the example as described in relation to Fig. 2 may relate to generating and storing EMCDT blocks in a moving window buffer , it is expressly contemplated that the description of Fig. 2 and the one or more embodiments as described herein are applicable to the generation and storage of EMCDT blocks in a queue buffer or other types of buffering data structures (e.g., circular buffers, priority buffers, data trees, etc.) that may be used to optimize operations such as, but not limited to, searching, sorting, data linkage, etc. For example, a queue buffer may have a size, that is fixed or may change over time, and EMCDT blocks may be sequentially generated and stored in the queue buffer. When the queue buffer is filled to its capacity, a first-in-first-out (FIFO) algorithm may be implemented to evict or remove the oldest EMCDT block to make room in the queue buffer for a most recently generated EMCDT block. Therefore, it should be understood that the reference to a moving window buffer is for illustrative purposes only.

Procedure 200 starts at step 205 and continues to step 210. At step 210, the EMCDT module 114 authenticates one or more messages. In an embodiment, the EMCDT module 114 may authenticate each message in a conventional manner utilizing a key having a delayed disclosure/transmission.

For example, a constellation of transmitters 108 may implement a message authentication technique that relies on delayed disclosure of keys for authentication. A particular transmitter 108 may transmit a message containing navigation data to be authenticated, which is received by receiver 104. For this example, let it be assumed that the one or more messages with navigation data to be authenticated are received by receiver 104 during subframe 1. Further, let it be assumed that the tags (e.g., MAC tags) for the one or more messages with the navigation data to be authenticated are received by receiver 104 during subframe 1 or subframe 2.

Later, the same or different transmitter 108 may transmit a different navigation message with a key. For this example, let it be assumed that the navigation message with the key is received by receiver 104 during subframe 3.

The EMCDT module 114 may utilize the key to authenticate the navigation data in the earlier message received during subframe 1. Specifically, the EMCDT module 114 may validate a root key using public information (e.g., public key) associated with transmitter 108. Once the root key is verified, it can be used to confirm the authenticity of an entire chain key, which would include the key from the later transmission and received during subframe 3. The stage of authenticating the chain key may be referred to as an initialization stage.

Once the chain key is verified, the authentication stage may be performed. Specifically, the EMCDT module 114 can generate a tag using the key received during subframe 3 and the navigation data of a navigation message to be authenticated that was received during subframe 1. The EMCDT module 114 may then compare the generated tag with the received tag (e.g., MAC tag) that, for example, may be received during subframe 1 or subframe 2. If the generated tag and the received tag match, the EMCDT module 114 may determine that the navigation data of the earlier message received during subframe 1 is authentic, thus resulting in an authenticated message. For this example, let it be assumed that seven navigation messages are received during subframe 1 and subsequently authenticated as described in relation to step 210 of Fig. 2.

Although step 210 of Fig. 2 describes a particular manner for authenticating a message, it is expressly contemplated that a message, which adheres to a delayed key disclosure protocol, can be authenticated in any of a variety of different ways in relation to step 210.

The procedure continues from step 210 to step 215. At step 215, the EMCDT module 114 generates a navigation message identifier (NMID) for each of the one or more authenticated messages. Continuing with the example, the EMCDT module 114 generates an NMID for each of the seven messages that are received during subframe 1 and subsequently authenticated.

In an embodiment, the EMCDT module 114 may generate the NMID by combining (1) a version stamp (i.e., identifier) from the authenticated message and (2) non-version data from the authenticated message. In an embodiment, the version stamp may be an Issue-Of-Data (IOD) stamp for IOD navigation data included in the authenticated message. For example, the IOD navigation data may be ephemeris data, clock corrections, Signal-in-Space Accuracy (SISA) data, space vehicle identifier (SVID) data, etc. In an embodiment, the IOD stamp may be 10 bits and a value from 0 to 1023.

In an embodiment, the non-version data may be non-IOD navigation data included in the authenticated message. For example, the non-IOD navigation data may be ionospheric corrections, Broadcast Group Delay (BGD) information, signal health, and data validity status.

When transmitter 108 adheres to the OSNMA protocol, the IOD stamp and non-IOD navigation data may be obtained from the Concatenated Authenticated Data (CAD) of the authenticated message when the Authenticating Data and Key Delay (ADKD) is a value of 0 or 12. The CAD may include word type 1 to word type 4 that contain ephemeris data, clock corrections, SISA data, and SVID. The CAD may also include word type 5 that includes ionospheric corrections, BGD information, signal health, and data validity status.

In an embodiment, the EMCDT module 114 may extract the IOD stamp and the non-IOD navigation data from the CAD of the message. For example, the EMCDT module 114 may extract the 10-bit IOD stamp from word type 1 to word type 4 of the CAD of the message. Additionally, the EMCDT module 114 may extract the bits for the ionospheric corrections, BGD, signal health, and data validity status which is the non-IOD navigation data, from word type 5 of the CAD of the message. Although the example describes obtaining the IOD stamp and non-IOD navigation data from the CAD of a message (e.g., OSNMA message), it is expressly contemplated that the one or more embodiments as described herein may obtain a version stamp (i.e., version identifier) and non-version data from a message in a similar manner. For example, the EMCDT module 114 may evaluate any type of message, which adheres to a delayed key (and code) disclosure protocol, to identify a version stamp and non-version data.

In an embodiment, the EMCDT module 114 may generate the NMID by concatenating the obtained version stamp (e.g., IOD stamp for ephemeris data, clock corrections, etc.) with the obtained non-version data (e.g., non-IOD navigation data that could be ionospheric corrections, BGD, signal health, data validity status, etc.).

The procedure continues from step 215 to step 220. At step 220, the EMCDT module 114 determines an identifier of the transmitter that transmitted each authenticated message. In this example, the seven navigation messages with the authenticated data are received over subframe 1. Therefore, the EMCDT module 114 may determine an identifier of the transmitter 108 (e.g., GNSS satellite) that transmitted each of the seven authenticated messages.

Additionally, and for this example, the tags used to authenticate the navigation data are received during subframe 1 or subframe 2. In an embodiment, the EMCDT module 114 can identify the data transmitter identifier from a Pseudorandom Noise data (PRND) field of the corresponding navigation message that includes the tag. The transmitter identifier from the PRND field may indicate the transmitter that transmitted the navigation data that was authenticated.

For example, when the tag is included with the authenticated data in the navigation message received during subframe 1, the EMCDT module 114 identifies the PRND field from the navigation message received during subframe 1. When the tag is included in the navigation message received during subframe 2, and without the corresponding authenticated navigation data, the EMCDT module 114 identifies the PRND field from the navigation message received during subframe 2. In an embodiment, the PRND field stores a space vehicle identifier (SVID) that is a unique identifier of the transmitter 108 (e.g., satellite) that transmitted the authenticated navigation data of the message that is received during subframe 1. In an embodiment, and when the PRND field does not exist, the PRND value is the SVID of the transmitter 108 that transmitted the navigation message with the tag.

The procedure continues from step 220 to step 225. At step 225, the EMCDT module 114 generates an EMCDT block for each authenticated message. In an embodiment, the EMCDT block for an authenticated message includes at least the generated NMID for the authenticated message, the tag used for authentication, and the identified PRND value. Continuing with the example, the EMCDT module 114 generates an EMCDT block for each of the seven authenticated messages received during subframe 1.

The procedure continues from step 225 to step 230. At step 230, the EMCDT module 114 includes, in a defined buffer, the generated EMCDT blocks and the key(s) utilized to authenticate the navigation data corresponding to the generated EMCDT blocks. In an embodiment, the same key may be utilized to authenticate all messages received during the same subframe. For this example, let it be assumed that the EMCDT module 114 authenticates the seven navigation messages received during subframe 1 using the key named Alpha Key that was received during subframe 3. As such, the EMCDT module 114 includes, in the buffer (e.g., moving window buffer or queue buffer), the EMCDT block generated for each of the seven authenticated messages and the key named Alpha Key.

As an illustrative example, let it be assumed that the buffer is a moving window buffer that is defined as being 5 minutes in length. Therefore, the moving window buffer includes 10 subframes, where each subframe has a duration of 30 seconds. Although the example refers to the moving window buffer being defined to 10 subframes, it is expressly contemplated that the moving window buffer may be defined to include any number of a plurality of subframes.

Let it be further assumed for this example that at the time the EMCDT module 114 includes the EMCDT blocks and key for subframe 1 to the moving window buffer, the moving window buffer does not include EMCDT blocks for any other subframes. Therefore, the EMCDT module 114 includes in the moving window buffer the seven EMCDT blocks for subframe 1 and the corresponding key named Alpha Key.

In an embodiment, and when the buffer is a moving window buffer, the EMCDT module 114 may generate a data structure for the subframe in the moving window buffer, where the data structure includes a subframe identifier that distinguishes the data structure from other data structures corresponding to other subframes. Therefore, and in this example, let it be assumed that the EMCDT module 114 generates a subframe data structure for subframe 1, where the subframe data structure has a subframe identifier of SF1. In an embodiment, the subframe data structure is a table that includes a table identifier corresponding to the subframe. Although the example as described herein makes reference to a table data structure, it is expressly contemplated that the subframe data structure may be any of a variety of different types of data structures. Therefore, the reference to a table is for illustrative purposes only.

In an embodiment, the EMCDT module 114 may store each of the seven generated EMCDT blocks for subframe 1 in subframe data structure SF1. For example, each of the seven generated EMCDT blocks for subframe 1 may be stored as a different entry in subframe data structure SF1. Additionally, the EMCDT module 114 may store the key named Alpha Key, which was used to authenticate each of the seven authenticated messages received during subframe 1, as an entry in subframe data structure SF1. Therefore, the subframe data structure SF1 for subframe 1 stores the EMCDT block that is generated for each of the seven authenticated messages received during subframe 1 and the corresponding key, Alpha Key, that is used to authenticate the seven messages.

After the EMCDT module 114 includes the seven EMCDT blocks and corresponding key in the buffer at step 230, the procedure 200 proceeds to step 210 and repeats to generate and include, in the buffer, the EMCDT blocks and corresponding key for a next subframe. Therefore, the procedure 200 repeats for subframes 2 through 10 such that the buffer includes the EMCDT blocks and corresponding keys for subframes 1 through 10, e.g., a total of 10 subframes that span a length of 5 minutes.

As a different example, consider that the moving window buffer includes 10 subframes at the time the EMCDT blocks and a corresponding key are to be included in the moving window buffer. When the moving window buffer includes the maximum number of subframes, e.g., 10 subframes, the EMCDT module 114 may remove the EMCDT blocks and the corresponding key for the oldest subframe included in the moving window buffer.

For example, let it be assumed that the moving window buffer includes subframes 1 through 10 and the EMCDT module 114 generates EMCDT blocks for subframe 11 in the manner described above in relation to Fig. 2. As such, and for this further example, the EMCDT blocks and corresponding key for subframe 1 are removed from the moving window buffer so that the EMCDT blocks and corresponding key for subframe 11 can be included in the moving window buffer.

Therefore, and when the EMCDT blocks for subframe 11 are included in the moving window buffer, the moving window buffer includes the EMCDT blocks for subframes 2 through 11. Therefore, the moving window buffer is a sliding buffer that shifts over time, covering a certain time period at each moment. The moving window buffer removes the EMCDT blocks for the oldest subframe to accommodate the EMCDT blocks that are newly generated for a most recent subframe with authenticated navigation messages. In an embodiment, the EMCDT blocks of the oldest subframe that are removed from the moving window buffer may be deleted to conserve storage resources.

Therefore, the EMCDT module 114 can continuously generate and add EMCDT blocks to the buffer for each consecutive subframe according to the one or more embodiments as described herein. As a result, a sliding/moving window buffer includes the most recently generated EMCDT blocks for authenticated messages.

Fig. 3A is an example moving window buffer including subframes 1 through 10 according to the one or more embodiments as described herein. As depicted in Fig. 3A, moving window buffer 305A is defined by boundaries 310A and 310B. As depicted in Fig. 3A, moving window buffer 305A includes subframes 1 through 10. Specifically, moving window buffer 305A includes subframe data structure SF1 for subframe 1. Subframe data structure SF1 includes EMCDT blocks EMCDT1, EMCDT2, EMCDT3, EMCDT4, EMCDT5, EMCDT6, and EMCDT7. Each of EMCDT1 through EMCDT7 are generated as described above in relation to Fig. 2 for the seven authenticated messages received during subframe 1. Each EMCDT block for an authenticated message includes at least the generated NMID for the authenticated message, the tag(s) (e.g., MAC tag(s)) used for authentication, and the identified PRND value.

Moreover, subframe data structure SF1 includes key named Alpha Key, which was used to authenticate each of the seven navigation messages received during subframe 1. For example, Alpha Key may have been included in a navigation message received during subframe 3.

The moving window buffer 305A as depicted in Fig. 3A includes subframe data structures SF2 through SF10 for the authenticated messages received during subframes 2 through 10. Specifically, each of subframe data structures SF2 through SF10 includes the EMCDT blocks for the authenticated messages and corresponding key for the respective subframe.

Fig. 3B is an example of the moving window buffer including subframes 2 through 11 according to the one or more embodiments as described herein. For this example, let it be assumed EMCDT module 114 authenticates the messages received during subframe 11 and generates EMCDT blocks for the authenticated messages in the manner described above in relation to Fig. 2. To maintain a moving window buffer that includes 10 subframes and the most recently generated EMCDT blocks for authenticated messages, the moving window buffer may slide/move such that more recently generated EMCDT blocks are included in the moving window buffer. For example, EMCDT module 114 may remove the EMCDT blocks of the oldest subframe included in moving window buffer 305A of Fig. 3A, which in this example is subframe 1.

As a result, the moving window buffer 305B of Fig. 3B can accommodate the EMCDT blocks for the authenticated messages received during subframe 11, which is identified in Fig. 3B with the identifier SF11. As depicted in Fig. 3B, moving window buffer 305B is defined by boundaries 310A and 310B and includes subframes 2 through 11. Therefore, the moving window buffer slides, i.e., shifts, advances or moves over time, by removing the EMCDT blocks for the oldest subframe in the moving window buffer as newly generated EMCDT blocks are generated for a more current subframe such that the newly generated EMCDT blocks can be added to the moving window buffer. The number of EMCDT blocks included in each subframe data structure of Figs. 3A and 3B is for simplicity and illustrative purposes only. It should be understood that each subframe data structure of Figs. 3A and 3B may have many more EMCDT blocks. Further, the use of the NATO Phonetic Alphabet for the key names included in each subframe data structure of Figs. 3A and 3B is for simplicity and has no significance.

As another example, let it be assumed that the buffer is not a moving window buffer of Figs. 3A and 3B, but that the buffer is instead a queue buffer. The queue buffer may be configured to store a certain amount of data, which may be referred to as the queue buffer size. According to the one or more embodiments as described herein, EMCDT blocks may be sequentially generated for authenticated messages, and stored regardless of which subframe the messages are received during. The EMCDT module 118 may sequentially store the generated EMCDT blocks in the queue buffer. The queue buffer may implement a FIFO algorithm such that when the queue buffer is filled to capacity based on the queue buffer size, the oldest EMCDT block is removed to make room for a most recently generated EMCDT block.

As will be described in further detail below in relation to Fig. 4, the EMCDT blocks of the buffer (e.g., moving window buffers 305A and 305B or queue buffer as described above) can be utilized when there is an authentication service interruption and as part of the described EMCDT algorithm to authenticate navigation data that adhere to a delayed key disclosure protocol.

Fig. 4 is a flow diagram of a sequence of steps for implementing an EMCDT algorithm towards authenticate navigation data, which adheres to a delayed key disclosure protocol, using one or more EMCDT blocks of a buffer according to the one or more embodiments as described herein. Procedure 400 starts at step 405 and continues to step 410. At step 410, the receiver 104 receives a message with navigation data to be authenticated. The message with the navigation data to be authenticated may be received during a reference subframe. In an embodiment, the navigation message is received from a transmitter 108 that implements a message authentication technique that employs delayed disclosure of keys as part of its authentication process. For this example, let it be assumed that the reference subframe is subframe 11.

In an embodiment, there may be an authentication service interruption. For example, the body of interest 102 with the coupled receiver 104 may be operating in an obstructed and/or challenging environment that causes the interruption in authentication service. In an embodiment, the authentication service interruption prevents the authentication information (e.g., code and/or key) from being properly received by subframe 12 and/or 13 to authenticate the navigation data received during subframe 11.

The procedure continues from step 410 to step 415. At step 415, the EMCDT module 114 determines if the transmitter identifier for the navigation data to be authenticated matches a transmitter identifier of one or more EMCDT blocks, each corresponding to a different authenticated message, included in the buffer. For this example, let it be assumed that the navigation data to be authenticated is included in a message that may be referred to as the unauthenticated message. In an embodiment, the EMCDT module 114 determines if the SVID from the unauthenticated message matches the PRND value of one or more EMCDT blocks included in the buffer. By identifying a match between the SVID and the PRND, the EMCDT module 114 can determine that the buffer includes an EMCDT block that corresponds to a previously authenticated message that was sent by the same transmitter that sent the message with the navigation data to be authenticated.

For this example, let it be assumed that the buffer is moving window buffer 305A of Fig. 3A that includes subframes 1 through 10. Therefore, and in this example, the EMCDT module 114 compares the SVID corresponding to the unauthenticated message with the navigation data to be authenticated to the PRND value for each of the EMCDT blocks included in subframe data structures SF1 through SF10 of moving window buffer 305A. In an embodiment, the EMCDT module 114 may first compare the SVID for the unauthenticated message with the PRND values of the EMCDT blocks of subframe 10, then subframe 9, then subframe 8, and so forth. Based on the comparison, the EMCDT module 114 can determine if there is a match or not.

If there is no match at step 415, the procedure continues from step 415 to step 420. At step 420, the EMCDT module 114 determines that an EMCDT confidence value is 0 or null. Specifically, the EMCDT module 114 determines that the EMCDT algorithm cannot be performed and thus the navigation data cannot be (alternatively) authenticated based on the execution of the EMCDT algorithm. Therefore, the navigation message with the navigation data to be authenticated and received during subframe 11, whose authentication may be affected by the authentication service interruption, cannot be (alternatively) authenticated according to the EMCDT algorithm and using a previously authenticated message. The procedure continues from step 420 to step 465 and the procedure ends.

For the example in relation to Fig. 4, let it be assumed that the SVID of the unauthenticated message matches the PRND value of EMCDT1 of subframe 10, EMCDT3 of subframe 6, and EMCDT4 of subframe 4. In this example, the EMCDT1 of subframe 10, EMCDT3 of subframe 6, and EMCDT4 of subframe 4 are the identified EMCDT blocks within the moving window buffer 305A at step 415. Based on at least one match at step 415, the procedure continues from step 415 to step 425.

At step 425, the EMCDT module 114 determines if the version stamp of the navigation data to be authenticated matches the version stamp (i.e., version identifier) of at least one of the identified EMCDT blocks from the buffer. For the example used herein, the EMCDT module 114 compares the version stamp of the navigation data to be authenticated and received during subframe 11 with the version stamp from the NMID of each of EMCDT1 of subframe 10, EMCDT3 of subframe 6, and EMCDT4 of subframe 4. In an embodiment, the version stamp is the IOD stamp for the IOD navigation data of the navigation message. For example, the IOD stamp may correspond to the IOD navigation data that includes one or more of ephemeris data, clock corrections, SISA data, SVID, etc.

In an embodiment, the version stamps matching indicates that the MACK corresponding to the previously authenticated message can be utilize for authenticating the navigation data to be authenticated and received during subframe 11. That is, the version stamps matching means that the previously authenticated message was authenticated using the same version stamp that would be required to alternatively or cross authenticate the message received during subframe 11 and whose authentication was affected by the authentication service interruption or collision attack.

Therefore, when the SVID matches the PRND for a previously authenticated message at step 415 and then the version stamps match at step 425, the EMCDT module 114 determines that the MACK for the previously authenticated message can be utilized to alternatively or cross authenticate the navigation data to be authenticated and received during subframe 11. That is, the navigation data to be authenticated can be tied to an EMCDT block that corresponds to a previously authenticated message when the two conditions are met. As a result, the MACK for the previously authenticated message can be utilized to alternatively or cross authenticate the navigation data to be authenticated.

If there is not at least one match at step 425, the procedure continues to step 430 and the EMCDT module 114 determines that the EMCDT confidence value is 0 or null. Specifically, the EMCDT module 114 determines that the navigation data cannot be (alternatively) authenticated based on the execution of the EMCDT algorithm. Therefore, the navigation data of the message received during subframe 11, whose authentication may be affected by the authentication service interruption or collision attack, cannot be (alternatively) authenticated according to the EMCDT algorithm and using a previously authenticated message. The procedure continues from step 430 to step 465 and the procedure ends.

For this example, let it be assumed that the version stamp of the navigation data to be authenticated and received during subframe 11 matches the version stamp of the NMID from EMCDT1 of subframe 10 and the version stamp of the NMID from EMCDT3 of subframe 6. In this example, the version stamp of the navigation data to be authenticated and received during subframe 11 does not match the version stamp of the NMID from EMCDT4 of subframe 4.

Therefore, the MACK corresponding to EMCDT1 of subframe 10 and the MACK corresponding to EMCDT3 of subframe 6 can be utilized to authenticate the navigation data of the message received during subframe 11 whose authentication may be affected by the authentication service interruption or collision attack. However, the MACK corresponding to EMCDT4 of subframe 4 cannot be utilized to (alternatively) authenticate the navigation data of the message received during subframe 11. In this example, EMCDT1 of subframe 10 and EMCDT3 of subframe 6 are now the identified EMCDT blocks from the moving window buffer 305A at step 425.

If the version stamps match for at least one previously authenticated message, the procedure continues from step 425 to step 435. At step435, the EMCDT module 114 obtains the cryptographic key corresponding to each identified EMCDT block. For example, the EMCDT module 114 may obtain the key named Juliett Key from subframe data structure SF10 since Juliett Key is the key used to authenticate the navigation messages corresponding to EMCDT1 and EMCDT2 of subframe 10. Similarly, the EMCDT module 114 may obtain the key named Foxtrot Key from subframe data structure SF6 since Foxtrot key is the key used to authenticate the navigation messages corresponding to EMCDT1 through EMCDT3 of subframe 6.

The procedure continues from step 435 to step 440. At step 440, the EMCDT module 114 generates new authenticating data using the version stamp from the navigation data to be authenticated and the non-version data from the NMID of each identified EMCDT block. In this example, the EMCDT module 114 may generate two new and different authenticating data since two different EMCDT blocks are identified, e.g., EMCDT1 of subframe 10 and EMCDT3 of subframe 6. Specifically, one new authenticating data is a combination, e.g., concatenation, of the version stamp from the navigation data to be authenticated of the message received during subframe 11 and the non-version data (e.g., ionospheric corrections) from the NMID of EMCDT1 of subframe 10. The other authenticating data for this example is a combination of the version stamp from the navigation data to be authenticated of the message received during subframe 11 and the non-version data (e.g., ionospheric corrections) from the NMID of EMCDT3 of subframe 6. Although the example describes ionospheric corrections as the non-version data, it is expressly contemplated that other types of data may be used for the non-version data.

The procedure continues from step 440 to step 445. At step 445, the EMCDT module 114 uses each obtained cryptographic key with the corresponding new authenticating data to generate a tag (e.g., MAC tag). For this example, the EMCDT module 114 uses the key named Juliett Key with the new authenticating data, which includes the version stamp from the navigation data to be authenticated and the non-version data from EMCDT1 of subframe 10, to generate a tag (e.g., MAC tag). For this example, let it be assumed that the generated tag corresponding to EMCDT1 of subframe 10 is tagABC.

Similarly, the EMCDT module 114 uses the key named Foxtrot Key with the new authenticating data, which includes the version stamp from the navigation data to be authenticated and the non-version data from EMCDT3 of subframe 6, to generate an additional tag. For this example, let it be assumed that the generated tag corresponding to EMCDT3 of subframe 6 is tagXYZ.

Therefore, and in this example, the EMCDT module 114 generates two different tags for the navigation data to be authenticated of the message received during subframe 11 using the information related to the EMCDT blocks corresponding to the two previously authenticated messages.

The procedure continues from step 445 to step 450. At step 450, the EMCDT module 114 determines if each generated tag matches its corresponding tag obtained from the identified EMCDT block.

In the example discussed herein, the EMCDT module 114 obtains the tag used for authenticating the navigation data of the navigation message corresponding to EMCDT1 of subframe 10 and the navigation data of the navigation message corresponding to EMCDT3 of subframe 6. Specifically, the EMCDT module 114 obtains the tag included in EMCDT1 of subframe 10. Similarly, the EMCDT module 114 obtains the tag included in EMCDT3 of subframe 6. For this example, let it be assumed that the tag from EMCDT1 of subframe 10 is tagABC. Additionally, let it be assumed that the tag from EMCDT3 of subframe 6 is tagXYZ.

The EMCDT module 114 may compare the obtained tag from each identified EMCDT block to the corresponding generated tag. For this example, and for EMCDT1 of subframe 10, the EMCDT module 114 compares the obtained tag of tagABC with the corresponding generated tag of tagABC. Similarly, and for EMCDT3 of subframe 6, the EMCDT module 114 compares the obtained tag of tagXYZ with the corresponding generated tag of tagXYZ.

If each obtained tag matches its corresponding generated tag such that there are all matches, the procedure continues from step 450 to step 455. At step 455, the EMCDT module 114 determines the EMCDT confidence value based on all the matches. Additionally, the EMCDT module 114 determines that the EMCDT algorithm can (alternatively or cross) authenticate the navigation data, whose authentication may be affected by the authentication service interruption or collision attack, using the EMCDT blocks. In this example, each obtained tag matches its corresponding generated tag.

In an embodiment, the EMCDT confidence value that is determined based on all the matches, e.g., all of the matches determined in step 450, is a non-zero and non-null value. The confidence value may be determined based on the number of matches and/or the subframes corresponding to the matches. In the example described herein, the number of matches is 2 and the subframes corresponding to the matches are subframe 6 and subframe 10.

The EMCDT confidence value may increase (1) as the number of matches continues to increase and/or (2) the subframes corresponding to the matches become more recent. For example, the EMCDT confidence value for 4 matches from subframes 6 and 10 would be a higher value than the EMCDT confidence value for 2 matches from subframes 6 and 10. Additionally, the EMCDT confidence value for 2 matches from subframes 6 and 10 would be a higher value than the EMCDT confidence value for 2 matches from subframes 1 and 2.

In an embodiment, the EMCDT confidence value $(CV_{EMCDT})$ may be calculated based on the mapped normalized and weighted time offsets of the authentication data from the current reference time over all available EMCDT blocks identified and matched for the navigation message. For example, $CV_{EMCDT}$ may be calculated as:

$$CV_{EMCDT} = \sum_{i=1}^{N_{EMCDT}} f\left(\frac{\omega_i T_{SF}}{T_0 + \Delta T_i}\right),$$

where:

- $N_{EMCDT}$ is a total number of identified and matched **EMCDT** blocks utilized for authentication;

- $\Delta T_i$ is a time offset (or a time difference) between a current reference time (i.e., the timestamp of the navigation message to be authenticated) and a reference time associated with i-th **EMCDT** block (i.e., the timestamp of the navigation message originally authenticated by the i-th **EMCDT** block and its corresponding key);

- $T_0$ is a system-defined time offset based on the minimum value of $\Delta T_i$ that satisfies the the condition $(T_0 + \Delta T_i > 0)$; e.g., since the **EMCDT** blocks are defined based on previously authenticated data, $\Delta T_i$ is strictly greater than zero allowing for $T_0$ to be set to zero;

- $T_{SF}$: is a Sub-Frame (i.e., data nit) time interval or authentication system update rate (e.g., 30 seconds); used to normalize $(T_0 + \Delta T_i)$;

- $\omega_i$ is a weight factor for the i-th EMCDT block based on the corresponding normalized time offset (i.e., $\frac{T_{SF}}{T_0 + \Delta T_i}$ ) and other potential reliability factors such as, but not limited to, the length of the authenticating tags (if different), the authentication algorithm, the geometry and quality of the transmitter 108 (e.g., satellite) transmitting the authentication data etc.;

and

- $f(\cdot)$ is a linear or non-linear mapping function designed to model the relationship between input parameters and the resulting output, e.g., $f(x) = x^n, n = 0, 1, 2,$ etc.

The procedure continues from step 455 to step 465 and the procedure ends.

The one or more embodiments as described herein can be used to alternatively or cross authenticate navigation data, which adheres to a delayed key disclosure and when an interruption in authentication service or collision attack occurs, using the MACKs from previously authenticated messages. Specifically, and in this example, the EMCDT module 114 alternatively or cross authenticates the navigation data of the message received during subframe 11 using (1) the MACK from EMCDT1 of subframe 10 that corresponds to a previously authenticated message and/or (2) the MACK from EMCDT3 of subframe 6 that corresponds to a different previously authenticated message. Thus, even though the navigation data received during subframe 11 cannot or can be authenticated using the standard OSNMA, the one or more embodiments as described herein can alternatively or cross authenticate the navigation message to enhance authentication service availability/continuity or reliability/integrity, as described herein.

If at least one obtained tag does not match its corresponding generated tag, the procedure continues from step 450 to step 460. At step 460, the EMCDT module 114 determines that the EMCDT confidence value is 0 or null. Additionally, the EMCDT module 114 may determine that the navigation data of the message cannot be alternatively authenticated using the EMCDT blocks. The procedure continues from step 460 to step 465 and the procedure ends.

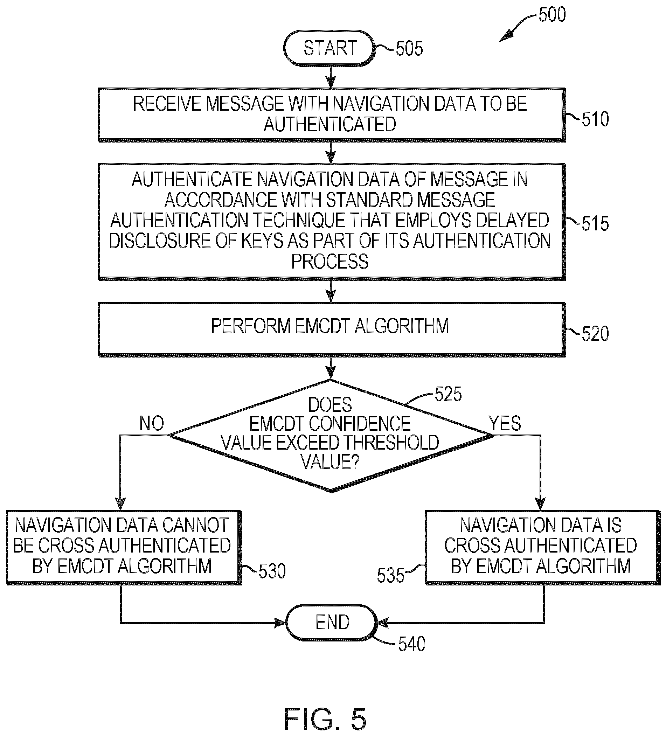

Fig. 5 is a flow diagram of a sequence of steps for authenticating navigation data, which adheres to a delayed key disclosure protocol, using a cross-verification technique according to the one or more embodiments as described herein. Procedure 500 starts at step 505 and continues to step 510. At step 510, the EMCDT module 114 receives a message with navigation data to be authenticated. The message with the data to be authenticated may be received during a reference subframe. The EMCDT module 114 may receive the message with the navigation data to be authenticated during the reference subframe in a similar manner as described above in relation to step 410 of Fig. 4. For this example, let it be assumed that the message with the navigation data to be authenticated is received by receiver 104 during reference subframe 11.

The procedure continues from step 510 to step 515. At step 515, the EMCDT module 114 authenticates the navigation data of the message in accordance with a standard message authentication technique that employs delayed disclosure of keys as part of its authentication process. The EMCDT module 114 may authenticate the navigation data of the message received during the reference subframe in a similar manner as described above in relation to step 210 of Fig. 2.

For example, let it be assumed that the key required for authentication is received by receiver 104 during subframe 13. Receiver 104 may authenticate the navigation data of the message received during subframe 11 using the key received during subframe 13 and in accordance with the standard message authentication technique. In an embodiment, the standard message authentication technique employing delayed disclosure of keys is the Open Service Navigation Message Authentication (OSNMA) service that is offered by the Galileo satellite navigation system.

The procedure continues from step 515 to step 520. At step 520, the EMCDT module 114 performs the EMCDT algorithm of Fig. 4. For example, and as described above, the EMCDT module 114 may determine an EMCDT confidence value based on the execution of the EMCDT algorithm. The EMCDT confidence value may be a value of zero/null or a calculated non-zero/-non-null value as described above in relation to Fig. 4.

The procedure continues from step 520 to step 525. At step 525, the EMCDT module 114 determines if the EMCDT confidence value exceeds a threshold value. In an embodiment, the threshold value may be predetermined and user defined. In an embodiment, the threshold value is a non-zero and non-null value. For the example as described in relation to Fig. 5, let it be assumed that the threshold value is 2. An increasing threshold value improves the level of confidence in the EMCDT authentication.

If the EMCDT module 114 determines that the EMCDT confidence value does not exceed the threshold value at step 525, the procedure continues to step 530. At step 530, the EMCDT module 114 determines that the navigation data of the message cannot be cross authenticated by the EMCDT algorithm for enhanced (i.e., increased) reliability.

If the EMCDT module 114 determines that the EMCDT confidence value exceeds the threshold value at step 525, the procedure continues to step 535. At step 535, the EMCDT module 114 determines that the message is cross authenticated by the EMCDT algorithm with enhanced (i.e., increased) reliability. The procedure continues from steps 530 and 535 to step 540. At step 540, the procedure ends.

The cross-verification technique is better suited for disrupted but non-obstructed environments where the receiver 104 may be subject to collision attacks but does not encounter an interruption of authentication service such that the navigation data of the message can be authenticated in accordance with a standard message authentication technique that employs delayed disclosure of keys as part of its authentication process. Moreover, the cross-verification technique improves reliability and integrity of the authentication since the navigation data of the message is first authenticated in the standard manner and then cross-checked (i.e., intersected) using the EMCDT confidence value that can be determined based on additional authentications using the MACKs from the buffer.

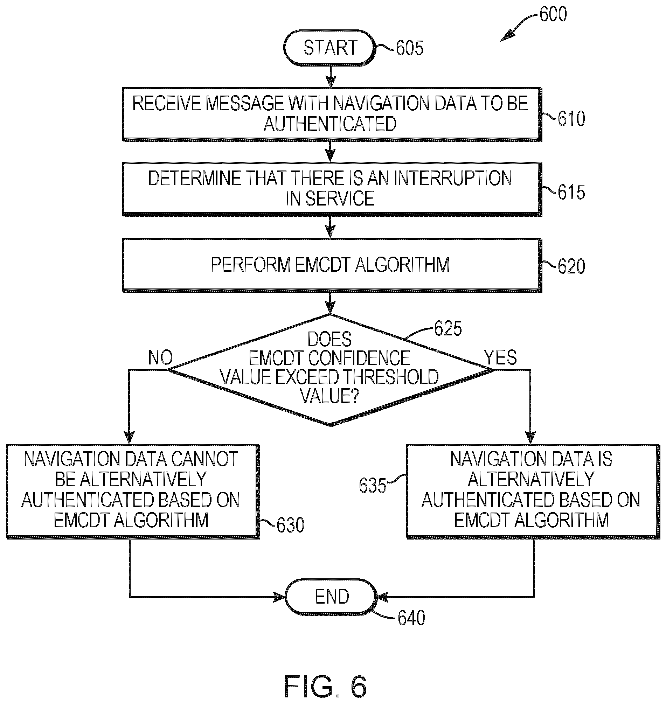

Fig. 6 is a flow diagram of a sequence of steps for authenticating navigation data, which adheres to a delayed key disclosure protocol, using an alternative-verification technique according to the one or more embodiments as described herein. Procedure 600 starts at step 605 and continues to step 610. At step 610, the EMCDT module 114 receives a message with navigation data to be authenticated. The message with the navigation data to be authenticated may be received during a reference subframe. The EMCDT module 114 may receive the message with navigation data to be authenticated during a reference subframe in a similar manner as described above in relation to step 410 of Fig. 4. For this example, let it be assumed that the message with the navigation data to be authenticated is received by receiver 104 during reference subframe 11.

The procedure continues from step 610 to step 615. At step 615, the EMCDT module 114 determines that there is an interruption in service. In an embodiment, the EMCDT module 114 may determine that there is an interruption in authentication service in a similar manner as described above in relation to step 410 of Fig. 4. In an embodiment, there may be an authentication service interruption such that the code and/or key needed for authentication have not been or will not be received in a later transmission (e.g., a later subframe transmission).

The procedure continues from step 615 to step 620. At step 615, the EMCDT module 114 performs the EMCDT algorithm of Fig. 4 as described above in relation to step 520 of Fig. 5. The procedure continues from step 620 to step 625. Ast step 625, the EMCDT module 114 determines if the EMCDT confidence value exceeds a threshold value as described above in relation to step 525. In an embodiment, the threshold value is a non-zero and non-null value.

If the EMCDT module 114 determines that the EMCDT confidence value does not exceed the threshold value at step 625, the procedure continues to step 630. At step 630, the EMCDT module 114 determines that the navigation data cannot be alternatively authenticated based on the performance of the EMCDT algorithm. If the EMCDT module 114 determines that the EMCDT confidence value exceeds the threshold value at step 625, the procedure continues to step 635. At step 635, the EMCDT module determines that the navigation data is alternatively authenticated based on the performance of the EMCDT algorithm. The procedure continues from steps 630 and 635 to step 640. At step 640, the procedure ends.

The alternative-verification technique is better suited for obstructed but not disrupted environments where the receiver 104 encounters an interruption of authentication service such that the navigation data of the message cannot be authenticated in accordance with a standard message authentication technique that employs delayed disclosure of keys as part of its authentication process. Moreover, the alternative-verification technique improves availability and continuity of the authentication since the navigation data of the message is alternatively determined to be authentic based on performance of the EMCDT algorithm, which is an alternative authentication technique to the standard message authentication technique that employs delayed disclosure of keys as part of its authentication process.

It should be understood that a wide variety of adaptations and modifications may be made to the techniques. For example, the steps of the flow diagram as described herein may be performed sequentially, in parallel, or in one or more varied orders. In general, functionality may be implemented in software, hardware or various combinations thereof. Software implementations may include electronic device-executable instructions (e.g., computer-executable instructions) stored in a non-transitory electronic device-readable medium (e.g., a non-transitory computer-readable medium), such as a volatile memory, a persistent storage device, or other tangible medium. Hardware implementations may include logic circuits, application specific integrated circuits, and/or other types of hardware components. Further, combined software/hardware implementations may include both electronic device-executable instructions stored in a non-transitory electronic device-readable medium, as well as one or more hardware components. Above all, it should be understood that the above description is meant to be taken only by way of example.

**Claims**

1. A system for authenticating data of electronic messages, the system comprising a memory, a processor coupled to the memory, and an Enhanced Message-to-Code Data Tie, EMCDT, module executed by the processor and configured to:

- receive, in a first data unit and from a transmitter, a navigation message with navigation data to be authenticated, wherein authentication of the navigation data requires use of a first key that is transmitted in a second data unit as part of an authentication service, wherein the second data unit is transmitted after the first data unit;
- determine that a first transmitter identifier of the transmitter matches a second transmitter identifier for a particular previously authenticated message that was authenticated during transmission of a third data unit that precedes the first data unit;
- determine that a first version data identifier of the navigation message matches a second version data identifier of the particular previously authenticated message; and
- authenticate the navigation data of the navigation message using

- a tag corresponding to the particular previously authenticated message and
- a second key that was used to authenticate the particular previously authenticated message.

2. The system of claim 1, wherein

- the authentication service is Open Service Navigation Message Authentication, OSNMA, and the transmitter is a navigation satellite that is part of the Galileo constellation; and/or
- the first version data identifier is an issue-of-data, IOD, stamp for IOD data that includes one or more of ephemeris data, clock corrections, Signal-in-Space Accuracy, SISA, data, and space vehicle identifier, SVID, data.

3. The system of claim 1, when authenticating the navigation data, the EMCDT module further configured to:

- combine the first version data identifier with non-version data from the particular previously authenticated message to generate new authenticating data;
- use the second key with the new authenticating data to generate a new tag;
- determine that the navigation data of the navigation message is authenticated when the new tag matches the tag corresponding to the particular previously authenticated message; and
- determine that the navigation data of the navigation message cannot be authenticated when the new tag does not match the tag corresponding to the particular previously authenticated message,

particularly wherein the EMCDT module is further configured to determine an EMCDT confidence value based on

- a total number of matches between the navigation data and a plurality of different previously authenticated messages that includes the particular previously authenticated message, and/or
- particular subframes corresponding to the plurality of different previous authenticated messages.

4. The system of claim 1, the EMCDT module further configured to:

- identify the second version identifier from the particular previously authenticated message;
- identify non-version data from the particular previously authenticated message;
- generate a navigation message ID, NMID, for the previously authenticated message using the second version identifier and the non-version data;
- generate a particular EMCDT block for the particular previously authenticated message, wherein the particular EMCDT block includes the NMID, the second transmitter identifier, and the tag.

5. The system of claim 4, the EMCDT module further configured to:

- define a buffer; and
- store, in the buffer, one or more different EMCDT blocks,

wherein each of the one or more different EMCDT blocks corresponds to a different previously authenticated message, and the one or more different EMCDT blocks include the particular EMCDT block for the particular previously authenticated message.

6. A method for authenticating electronic messages, the method comprising:

- receiving, by a processor of a navigation receiver, a navigation message with navigation data, wherein the navigation message is received in a first data unit from a transmitter, wherein authentication of the navigation data requires use of a first key that is transmitted in a second data unit as part of an authentication service, and wherein the second data unit is after the first data unit;
- determining, by the processor, that a first transmitter identifier of the transmitter matches a second transmitter identifier for a particular previously authenticated message that was authenticated during transmission of a third data unit that precedes the first data unit;
- determining, by the processor, that a first version data identifier of the navigation messages matches a second version data identifier of the particular previously authenticated message; and
- authenticating the navigation data of the navigation message using

- a tag corresponding to the particular previously authenticated message and
- a second key that was used to authenticate the particular previously authenticated message.

7. The method of claim 6, wherein

- the authentication service is Open Service Navigation Message Authentication, OSNMA, and the transmitter is a navigation satellite that is part of the Galileo constellation; and/or
- the first version data stamp is an issue-of-data, IOD, stamp for IOD data that includes one or more of ephemeris data, clock corrections, Signal-in-Space Accuracy, SISA, data, and space vehicle identifier, SVID, data.

8. The method of claim 6, wherein, when authenticating the navigation data, the method further comprises:

- combining the first version data identifier with non-version data from the particular previously authenticated message to generate new authenticating data;
- using the second key with the new authenticating data to generate a new tag;
- determining that the navigation data of the navigation message is authenticated when the new tag matches the tag corresponding to the particular previously authenticated message; and
- determining that the navigation data of the navigation message cannot be authenticated when the new tag does not match the tag corresponding to the particular previously authenticated message,

particularly wherein the method further comprises determining an EMCDT confidence value based on

- a total number of matches between the navigation data and a plurality of different previously authenticated messages that includes the particular previously authenticated message and/or
- particular subframes corresponding to the plurality of different previous authenticated messages.

9. The method of claim 6, wherein, when authenticating the navigation data, the method further comprises:

- identifying the second version identifier from the particular previously authenticated message;
- identifying non-version data from the particular previously authenticated message;
- generating a navigation message ID, NMID, for the previously authenticated message using the second version identifier and the non-version data; and
- generating a particular EMCDT block for the particular previously authenticated message, wherein the particular EMCDT block includes the NMID, the second transmitter identifier, and the tag.

10. The method of claim 9, the method further comprising:

- defining a buffer; and
- storing, in the buffer, one or more different EMCDT blocks,

wherein each of the one or more different EMCDT blocks corresponds to a different previously authenticated message, and the one or more different EMCDT blocks include the particular EMCDT block for the particular previously authenticated message.

11. A non-transitory computer readable medium having software encoded thereon, the software when executed by one or more computing devices operable to:

- receive a navigation message with navigation data in a first data unit and from a transmitter, wherein authentication of the navigation data is based on an authentication service that requires use of a first key that is transmitted in a second data unit, wherein the second data unit is a different data unit than the first data unit;
- determine that a first transmitter identifier of the transmitter matches a second transmitter identifier for a particular previously authenticated message that was authenticated during a third data unit that precedes the first data unit;
- determine that a first version data identifier of the navigation messages matches a second version data identifier of the particular previously authenticated message; and
- authenticate the navigation data of the navigation message using

- a tag corresponding to the particular previously authenticated message and
- a second key that was used to authenticate the particular previously authenticated message.

12. The non-transitory computer readable medium of claim 11, wherein

- the authentication service is Open Service Navigation Message Authentication, OSNMA, and the transmitter is a navigation satellite that is part of the Galileo constellation; and/or
- the first version data identifier is an issue-of-data, IOD, stamp for IOD data that includes one or more of ephemeris data, clock corrections, Signal-in-Space Accuracy (SISA) data, and space vehicle identifier, SVID, data.

13. The non-transitory computer readable medium of claim 12, wherein, when authenticating the navigation data, the software is further operable to:

- combine the first version data identifier with non-version data from the particular previously authenticated message to generate new authenticating data;
- use the second key with the new authenticating data to generate a new tag;
- determine that the navigation data of the navigation message is authenticated when the new tag matches the tag corresponding to the particular previously authenticated message; and
- determine that the navigation data of the navigation message cannot be authenticated when the new tag does not match the tag corresponding to the particular previously authenticated message,

particularly wherein the software is further operable to:

- determine whether the navigation data can be authenticated using the first key;
- determine that the navigation data is authenticated with standard security when the navigation data is authenticated using the first key and the navigation data is not authenticated using the second key; and
- determine that the navigation data is authenticated with additional reliability when the navigation data is authenticated using the first key and the second key.

14. The non-transitory computer readable medium of claim 11, the software further operable to:

- identify the second version identifier from the particular previously authenticated message;
- identify non-version data from the particular previously authenticated message;
- generate a navigation message ID, NMID, for the previously authenticated message using the second version identifier and the non-version data; and
- generate a particular EMCDT block for the particular previously authenticated message, wherein the particular EMCDT block includes the NMID, the second transmitter identifier, and the tag.

15. The non-transitory computer readable medium of claim 14, the software further operable to:

- define a buffer; and
- store, in the buffer, one or more different EMCDT blocks,

wherein each of the one or more different EMCDT blocks corresponds to a different previously authenticated message, and the one or more different EMCDT blocks include the particular EMCDT block for the particular previously authenticated message.

FIG. 1

FIG. 2

EP 4 711 818 A1

| SF1 | SF2 | SF3 | SF4 | SF5 | SF6 | SF7 | SF8 | SF9 | SF10 |
|---|---|---|---|---|---|---|---|---|---|
| EMCDT1 EMCDT2 EMCDT3 EMCDT4 EMCDT5 EMCDT6 EMCDT7 | EMCDT1 EMCDT2 EMCDT3 | EMCDT1 EMCDT2 EMCDT3 EMCDT4 | EMCDT1 EMCDT2 | EMCDT1 EMCDT2 EMCDT3 | EMCDT1 EMCDT2 EMCDT3 | EMCDT1 EMCDT2 | EMCDT1 EMCDT2 EMCDT3 | EMCDT1 EMCDT2 | EMCDT1 EMCDT2 |
| ALPHA KEY | BRAVO KEY | CHARLIE KEY | DELTA KEY | ECHO KEY | FOXTROT KEY | GOLF KEY | HOTEL KEY | INDIA KEY | JULIETT KEY |

305A

310A 310B

FIG. 3A

| SF1 | SF2 | SF3 | SF4 | SF5 | SF6 | SF7 | SF8 | SF9 | SF10 | SF11 |
|-----|-----|-----|-----|-----|-----|-----|-----|-----|------|------|
| EMCDT1 EMCDT2<br>EMCDT3 EMCDT4<br>EMCDT5 EMCDT6<br>EMCDT7 | EMCDT1<br>EMCDT2<br>EMCDT3 | EMCDT1<br>EMCDT2<br>EMCDT3<br>EMCDT4 | EMCDT1<br>EMCDT2 | EMCDT1<br>EMCDT2<br>EMCDT3 | EMCDT1<br>EMCDT2<br>EMCDT3 | EMCDT1<br>EMCDT2 | EMCDT1<br>EMCDT2<br>EMCDT3 | EMCDT1<br>EMCDT2 | EMCDT1<br>EMCDT2 | EMCDT1<br>EMCDT2<br>EMCDT3 |
| ALPHA<br>KEY | BRAVO<br>KEY | CHARLIE<br>KEY | DELTA<br>KEY | ECHO<br>KEY | FOXTROT<br>KEY | GOLF<br>KEY | HOTEL<br>KEY | INDIA<br>KEY | JULIETT<br>KEY | LIMA<br>KEY |

305B

310A

310B

FIG. 3B

EP 4 711 818 A1

FIG. 4

500

START ~505

RECEIVE MESSAGE WITH NAVIGATION DATA TO BE
AUTHENTICATED ~510

AUTHENTICATE NAVIGATION DATA OF MESSAGE IN
ACCORDANCE WITH STANDARD MESSAGE
AUTHENTICATION TECHNIQUE THAT EMPLOYS DELAYED ~515
DISCLOSURE OF KEYS AS PART OF ITS AUTHENTICATION
PROCESS

PERFORM EMCDT ALGORITHM ~520

525
DOES
EMCDT CONFIDENCE
NO ╱ VALUE EXCEED THRESHOLD ╲ YES
VALUE?

NAVIGATION DATA CANNOT
BE CROSS AUTHENTICATED
BY EMCDT ALGORITHM ~530

NAVIGATION DATA IS
535~ CROSS AUTHENTICATED
BY EMCDT ALGORITHM

END ~540

FIG. 5

FIG. 6

Europäisches
Patentamt

European
Patent Office

Office européen
des brevets

# EUROPEAN SEARCH REPORT

**Application Number**

EP 25 20 0186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALEIX GALAN ET AL: "Improving Galileo OSNMA Time To First Authenticated Fix", ARXIV.ORG, CORNELL UNIVERSITY LIBRARY, 201 OLIN LIBRARY CORNELL UNIVERSITY ITHACA, NY 14853, 21 March 2024 (2024-03-21), XP091707426, * figures 1-7 * * pages 1-6; Abstract - III. D. Benfit of a Lower TL * | 1-15 | INV. G01S19/21 |
| A | EUSPA: "GALILEO OPEN SERVICE NAVIGATION MESSAGE AUTHENTICATION (OSNMA) SIGNAL-IN-SPACE INTERFACE CONTROL DOCUMENT (SIS ICD)", , 31 October 2023 (2023-10-31), pages 1-55, XP093357284, DOI: 10.2878/594840 ISBN: 978-92-9206-067-1 Retrieved from the Internet: URL:https://www.gsc-europa.eu/sites/defaul t/files/sites/all/files/Galileo_OSNMA_SIS_ ICD_v1.1.pdf [retrieved on 2026-01-23] * the whole document * | 1-15 | |

TECHNICAL FIELDS
SEARCHED      (IPC)

G01S

-/--

The present search report has been drawn up for all claims

| Place of search | Date of completion of the search | Examiner |
|---|---|---|
| Munich | 27 January 2026 | Krummenacker, Benoît |

EPO FORM 1503 03.82 (P04C01)

**page 1 of 2**

Europäisches
Patentamt

European
Patent Office

Office européen
des brevets

# EUROPEAN SEARCH REPORT

**Application Number**

EP 25 20 0186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EUSPA: "GALILEO OPEN SERVICE NAVIGATION MESSAGE AUTHENTICATION (OSNMA) RECEIVER GUIDELINES", , 31 January 2024 (2024-01-31), pages 1-65, XP093357596, DOI: 10.2878/256023 ISBN: 978-92-9206-066-4 Retrieved from the Internet: URL:https://www.gsc-europa.eu/sites/defaul t/files/sites/all/files/Galileo_OSNMA_Rece iver_Guidelines_v1.3.pdf [retrieved on 2026-01-23] * pages 25-27;   5.5 Verification of the Tag and Authentication of Navigation Data * * pages 37-39;   A.6.5 Tags Verification * ----- | 1-15 | |

**TECHNICAL FIELDS SEARCHED   (IPC)**

The present search report has been drawn up for all claims

| Place of search | Date of completion of the search | Examiner |
|---|---|---|
| Munich | 27 January 2026 | Krummenacker, Benoît |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................................
& : member of the same patent family, corresponding
    document

EPO FORM 1503 03.82 (P04C01)

page 2 of 2